# EUROPEAN PATENT SPECIFICATION

(11) **EP 2 856 765 B1**
(45) Date of publication and mention of the grant of the patent: **31.07.2019**
(21) Application number: 12877716.6
(22) Date of filing: 20.11.2012
(51) Int. Cl.: H04N 21/472, H04N 21/41, H04N 21/442, H04N 21/488, H04N 21/485, H04N 21/431, H04N 21/422, H04N 21/4223

(54) **METHOD AND HOME DEVICE FOR OUTPUTTING RESPONSE TO USER INPUT**
VERFAHREN UND HEIMVORRICHTUNG ZUR AUSGABE EINER ANTWORT AUF EINE BENUTZEREINGABE
PROCÉDÉ ET DISPOSITIF DOMESTIQUE POUR SORTIR UNE RÉPONSE À UNE ENTRÉE D'UTILISATEUR

(30) Priority: 31.05.2012 KR 20120058541; 21.06.2012 US 201213529767
(43) Date of publication of application: 08.04.2015
(73) Proprietor: LG Electronics Inc., Yeongdeungpo-gu Seoul 150-721 (KR)
(72) Inventor: KIM, Jihyun, Seoul 137-724 (KR)
(74) Representative: Frenkel, Matthias Alexander
(86) International application number: PCT/KR2012/009839
(87) International publication number: WO 2013/180354

(56) References cited:
- JP-A- 2006 041 887
- JP-A- 2007 189 397
- KR-A- 20110 100 060
- US-A1- 2004 098 462
- US-A1- 2009 052 859
- US-A1- 2011 267 374
- US-A1- 2012 075 178
- US-B1- 7 171 108

## Description

### Technical Field

The present invention relates to a method and home device for outputting a response to a user input, and more particularly, to a method and home device for efficiently providing a user with a response to a user input even in a state in which the home device is outputting audio and/or video content with minimized interference with the content output.

### Background Art

The development of multimedia technologies of today enables output of a variety of content using a device. This content may be content autonomously stored in a device, content received via data communication, content received via broadcast signals, etc. Also, there are various kinds of content including video content, audio content, or combined video and audio content.

Meanwhile, the device may implement various other operations by multi-tasking even during output of content. In this case, the device may receive a user input, such as, e.g., a command or a question with respect to a particular operation, and thus may have to provide an appropriate response to the user input. However, to allow the device to provide the response to the user input during content output, a method for efficiently providing the response to the user input while eliminating interference with the content output is necessary.

Document US 2012/075178 A1 may be construed to disclose a dynamic response generating apparatus and method that may analyze an intention of a user based on user input information received from an inputting device, may analyze at least one of first response information with respect to the analyzed intention of the user, context information associated with the user input information, user motion information, and environmental information, may dynamically determine a modality with respect to the first response information, may process the first response information, and may dynamically generate second response information in a form of via the determined modality.

Document US 2004/098462 A1 may be construed to disclose a system and method to facilitate providing computer users with efficient access to electronic notifications while minimizing disruption in the context of ongoing tasks. A notification system provides visual information heralds that provide summarizations of notifications to users. An information controller considers the importance or urgency of content and a user's current and/or recent activities in decisions about the rendering and positioning of the information herald on a display screen or screens in order to facilitate user processing of the summarized notifications with minimal disruption to ongoing tasks.

Document US 7,171,108 B1 may be construed to disclose an audiovisual system and a method make audiovisual programs available to a user and present on a display device a first available audiovisual program selected from the available audiovisual programs. The audiovisual system includes a disk drive and a preference determination module. The preference determination module estimates a degree of interest for each available audiovisual program. The audiovisual system further includes an alert module that generates an interrupt signal in response to the degrees of interest of the available audiovisual programs. The audiovisual system further includes a system controller responsive to user input and electronic program guide information to present the first available audiovisual program to the user. The system controller is further responsive to the interrupt signal from the alert module to interrupt presenting the first available audiovisual program to provide information to the user regarding at least a second available audiovisual program.

Document US 2011/267374 A1 may be construed to disclose an information displaying apparatus which is capable of presenting notification information to the user without giving the user an odd impression. The information displaying apparatus displays, on a screen, notification information to be presented to a user, and includes: a user state detecting unit detecting a user state which indicates a physical state of the user; a degree-of-concentration estimating unit estimating a degree of concentration based on the detected user state, the degree of concentration indicating a degree in which the user concentrates on the screen; an application control unit determining an initial display position of the notification information based on the estimated degree of concentration, such that the initial display position is located outside an effective visual field area which is visible to the user; and a rendering unit (i) displaying the notification information at the determined initial display position, and (ii) changing at least one of a display position and a display state of the displayed notification information.

### Disclosure of Invention

### Technical Problem

Accordingly, the present invention is directed to a method and home device for outputting a response to a user input that substantially obviate one or more problems due to limitations and disadvantages of the related art.

One object of the present invention is to efficiently provide a response to a user input even in a situation in which a device is outputting content including a video or audio output.

Another object of the present invention is to provide a response to a user input while maximally eliminating interference with content that is being output and to assist a user in clearly identifying the response to the user input.

Another object of the present invention is to provide a response to a user input such that the response to the user input does not prevent output of content.

A further object of the present invention is to detect a situation with respect to whether or not a user can recognize a response to a user input, thereby providing the response to the user input based on the detected result.

### Solution to Problem

According to the disclosure, there are provided a method, a computer-readable medium and an apparatus according to the independent claims. Developments are set forth in the dependent claims.

It is to be understood that both the foregoing general description and the following detailed description of the present invention are exemplary and explanatory and are intended to provide further explanation of the invention as claimed.

### Advantageous Effects of Invention

As is apparent from the above description, according to the present invention, it is possible to assist a user in clearly recognizing a response to a user input without interference with content that is being output through a home device. This may prevent the user from being hindered in watching the content during provision of the response to the user input.

Further, according to an embodiment of the present invention, it is possible to smartly adjust output of the response to the user input based on properties of the content that is being output from the home device. This may ensure that the user receives the response to the user input in an optimum state.

Furthermore, according to the embodiment of the present invention, the home device may check whether or not the user is under a situation capable of recognizing the response to the user input through the home device, and may provide the response to the user input based on the checked result. This may ensure that the response to the user input is accurately transmitted to the user without a risk of the user missing the response to the user input.

According to the embodiment of the present invention, even while the home device is outputting content, the user may assist the home device in easily implementing various multi-tasking operations.

### Brief Description of Drawings

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a view showing a home device according to an embodiment of the present invention and a user who is using the home device;
FIG. 2 is a block diagram showing a configuration of the home device according to the embodiment of the present invention;
FIG. 3 is a flowchart showing a method for outputting a response to a user input using a home device according to the embodiment of the present invention;
FIGs. 4 and 5 are tables showing detailed embodiments of an output condition of the response to the user input according to the present invention; and
FIGs. 6 to 9 are views showing output situations of the response to the user input according to different embodiments of the present invention.

### Best Mode for Carrying out the Invention

Although the terms used in the following description are selected, as much as possible, from general terms that are widely used at present while taking into consideration of the functions obtained in accordance with the present invention, these terms may be replaced by other terms based on intensions of those skilled in the art, customs, emergence of new technologies, or the like. Also, in a particular case, terms that are arbitrarily selected by the applicant of the present invention may be used. In this case, the meanings of these terms may be described in corresponding description parts of the invention. Accordingly, it should be noted that the terms used herein should be construed based on practical meanings thereof and the whole content of this specification, rather than being simply construed based on names of the terms.

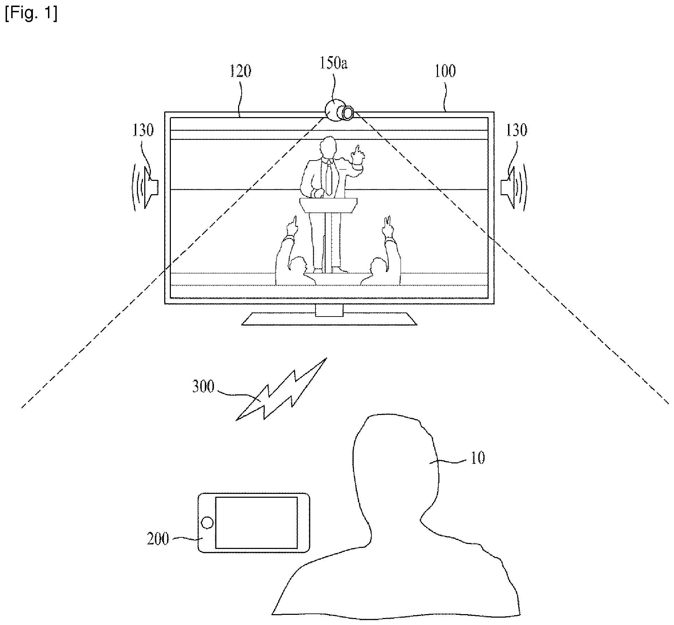

FIG. 1 illustrates a home device 100 according to an embodiment of the present invention and a user 10 who is using the home device 100.

The home device 100 according to the present invention may output a variety of content. For example, the home device 100 may provide a variety of multimedia content, such as a live broadcast, movies, music, drama, Web pages, games, applications, etc. This content may be content autonomously stored in the device, content received via data communication, content received via broadcast signals, etc. Also, the content may include at least one of a video output and an audio output. The video output may be generated from a display unit 120 of the home device 100, and the audio output may be generated from an audio output unit 130 of the home device 100.

The home device 100 may further include a sensor unit including a variety of sensors. In the present invention, the sensor unit may include an image capturing sensor 150a. The image capturing sensor 150a serves to detect an image around the home device 100. The home device 100 may recognize, for example, whether or not a user is present around the home device 100, based on the image detected by the image capturing sensor 150a. The image capturing sensor 150a may be replaced by an infrared sensor, etc., according to the objects of the present invention.

The sensor unit may further include an audio input sensor (not shown). The audio input sensor may receive, e.g., user's voice, input into the home device 100. A detailed description of the image capturing sensor 150a and the audio input sensor will be given below.

Meanwhile, according to the embodiment of the present invention, the user 10 may implement a user input via the home device 100 in various ways. According to the embodiment of the present invention, the user input may include a voice input, gesture input, motion input, touch input, button input, keyboard input, mouse input, sight line input, etc. Although the home device 100 may directly receive the user input, the user input may be received by an external device 200 that is connected to the home device 100 through a network 300.

In the present invention, the user input may include a command or question with respect to a particular operation. In this case, the home device 100 may implement an operation depending on the command input by the user, or may implement a certain operation to answer the question input by the user, such as calculation or search. After the operation based on the user input as described above has been completely implemented, the home device 100 may output a response based on whether or not the operation is successfully implemented, or based on an answer to the question. In the present invention, the response of the home device 100 corresponding to the user input is referred to as a response to a user input.

In the present invention, a response to a user input may include at least one of an audio response and a video response. The audio response is a response output via sound, and may be output from the audio output unit 130 of the home device 100. The video response is a response output via an image, and may be output from the display unit 120 of the home device 100. Meanwhile, the audio response and the video response, according to the embodiment of the present invention, may be output from the external device 200 that is connected to the home device 100 through the network 300.

In the present invention, the home device 100 includes a variety of electronic devices capable of outputting content and receiving a user input. In one example, the home device 100 may be a Personal Computer (PC), Personal Digital Assistant (PDA), laptop computer, tablet PC, television, etc. In another example, the home device 100 may include a home appliance, such as a refrigerator, washing machine, microwave oven, etc., which is equipped with at least one of the display unit 120 and the audio output unit 130. In a further example, the home device 100 may include a variety of electronic devices capable of displaying an image or outputting sound, and also capable of receiving a user input through at least one user input means. The home device 100 may output a response to the user input through at least one of the display unit 120 and the audio output unit 130.

Meanwhile, in the present invention, the home device 100 may receive a user input through at least one external device 200. The external device 200 includes a variety of electronic devices capable of transmitting the user input to the home device 100 via wired or wireless communication. For example, a PDA, tablet PC, smart-phone, headset, remote controller, etc. may be used as the external device 200. According to another embodiment of the present invention, the external device 200 may receive a response to a user input from the home device 100, and may output the response to the user input. To this end, the external device 200 may include at least one of a display unit and an audio output unit.

In the present invention, the network 300 may include a variety of wired or wireless networks to enable communication between the home device 100 and the external device 200. In this case, available wireless networks may include Near Field Communication (NFC), ZigBee™, infrared communication, Bluetooth™, Wi-Fi™, etc., but the present invention is not limited thereto. Communication between the home device 100 and the external device 200 may be accomplished using any one of the above
enumerated networks 300, or combinations thereof.

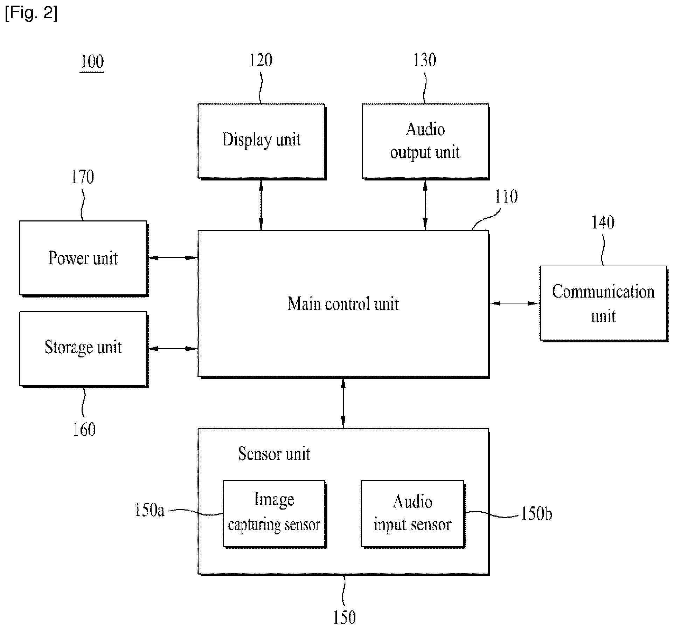

FIG. 2 is a block diagram showing the home device 100 according to the embodiment of the present invention.

Referring to FIG. 2, the home device 100 of the present invention may include a main control unit 110, the display unit 120, the audio output unit 130, a communication unit 140, a sensor unit 150, a storage unit 160, and a power unit 180.

First, the display unit 120 functions to generate a video output on a display screen. The display unit 120 may generate the video output based on a control command of the main control unit 110 or content executed by the main control unit 110. Also, according to the embodiment of the present invention, the display unit 120 may be of a touch sensitive display type, and thus may also be used as a touch sensor. Meanwhile, according to another embodiment of the present invention, the home device 100 may include a display control unit (not shown) to control an additional display device connected to the home device 100 so as to generate a video output.

Next, the audio output unit 130 includes an audio output means, such as a speaker, etc. The audio output unit 130 may generate an audio output based on a control command of the main control unit 110 or content executed by the main control unit 110.

In the present invention, the home device 100 may include at least one of the display unit 120 and the audio output unit 130. If the home device 100 includes the display unit 120, the home device 100 may output the video output of content and the video response. If the home device 100 includes the audio output unit 130, the home device 100 may output the audio output of content and the audio response.

Next, the communication unit 140 may transmit and receive data by implementing communication with the external device using a variety of protocols. Also, the communication unit 140 may be connected to a wired or wireless network so as to transmit and receive digital data, such as content, etc.

The sensor unit 150 may transmit a user input or an environment recognized by the home device 100 to the main control unit 110 using a plurality of sensors mounted to the home device 100. In this case, the sensor unit 150 may include a plurality of sensing means. In an embodiment, the plurality of sensing means may include a gravity sensor, geomagnetic sensor, motion sensor, gyro sensor, acceleration sensor, inclination sensor, brightness sensor, height sensor, olfactory sensor, temperature sensor, depth sensor, pressure sensor, bending sensor, audio sensor, video sensor, Global Positioning System (GPS), touch sensor, etc. The sensor unit 150 is a genetic term of the above described various sensing means, and may sense a variety of user inputs and user environments and may transmit the sensed result to the home device 100 so as to allow the home device 100 to implement an operation based on the sensed result. The above described sensors may be provided as individual elements included in the home device 100, or may be combined to constitute at least one element included in the home device 100.

The sensor unit 150 according to the embodiment of the present invention may include the image capturing sensor 150a. The image capturing sensor 150a functions to detect an image around the home device 100 and transmit the detected image to the main control unit 110. The main control unit 110 may detect whether or not a user is present around the home device 100 based on the image detected using the image capturing sensor 150a. Additionally, the main control unit 110 may recognize the presence of an individual user based on the image detected using the image capturing sensor 150a, and may also recognize a user input, such as a gesture input, motion input, sight line input, etc. The image capturing sensor 150a may be replaced by an infrared sensor (not shown), etc., according to the objects of the present invention. The home device 100 of the present invention may detect whether or not a user is present around the home device 100 using the infrared sensor.

Meanwhile, the sensor unit 150 according to the embodiment of the present invention may include an audio input sensor 150b. The audio input sensor 150b may receive voice of a user input into the home device 100. The audio input sensor 150b may include an audio input means, such as a microphone.

In the present invention, the storage unit 160 may store a variety of digital data, such as video, audio, photographs, moving images, applications, etc. The storage unit 160 may provide a variety of storage spaces for digital data, such as a flash memory, Hard Disk Drive (HDD), Solid State Drive (SSD), etc.

The power unit 170 may be a battery within the home device 100 or a power source connected to an external power supply, and may supply power to the home device 100.

The main control unit 110 of the present invention may execute, for example, content received via data communication or broadcast signals, or content stored in the storage unit 160. The main control unit 110 may also execute a variety of applications and process data within the home device 100. Additionally, the main control unit 110 may control the above described respective units of the home device 100, and may control transmission and reception of data between the units.

In FIG. 2, the home device 100 according to the embodiment of the present invention is shown in a block diagram in which individual blocks are given to logically divide the elements of the device. Accordingly, the above described elements of the device may be mounted to a single chip or a plurality of chips based on device design.

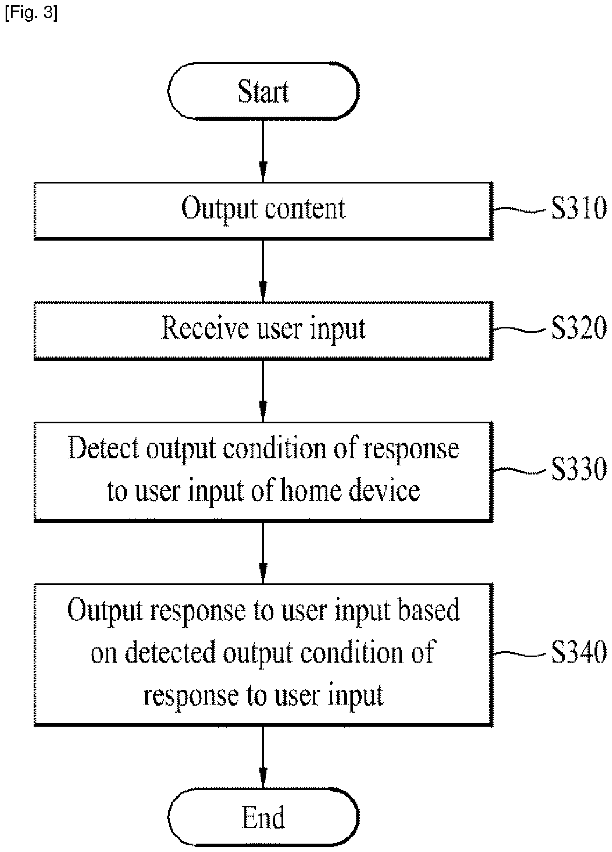

FIG. 3 is a flowchart showing a method for outputting a response to a user input using the home device according to the embodiment of the present invention. In the present invention, sequential operations of FIG. 3 may be controlled by the main control unit 110 shown in FIG. 2.

First, according to the embodiment of the present invention, the home device 100 may output content (S310). The content may include at least one of the video output and the audio output as described above. In this case, the video output may be output using the display unit of the home device, and the audio output may be output using the audio output unit of the home device.

Next, the home device according to the present invention may receive a user input (S320). In the present invention, the user input may include at least one of a voice input, gesture input, motion input, touch input, button input, keyboard input, mouse input, and sight line input. Of course, various other input means may be employed. The user input may be received by the sensor unit of the home device, and then be transmitted to the main control unit. Alternatively, according to another embodiment of the present invention, the user input may be received by the external device having a separate sensor unit, and then be transmitted to the main control unit of the home device.

The home device may implement an operation based on the received user input. For example, if the user input is a command with respect to a particular operation, the user may implement the corresponding operation. Also, if the user input is a question, the user may implement an operation to answer the question, such as calculation or search. After the operation based on the user input has been completely implemented, the home device may output a response to the user input. Alternatively, the home device may directly respond to the received user input to thereby output a response to the user input. In this case, the home device according to the embodiment of the present invention must detect an output condition of the response to the user input, in order to output the response to the user input (S330).

There may be provided at least one output condition of the response to the user input.

First, the output condition of the response to the user input may include an audio condition of the content that denotes a degree of importance in the audio output of content, and a video condition of the content that denotes a degree of importance in the video output of content. Each of the audio condition of the content and the video condition of the content may be represented by an integer value or a flag value that denotes a degree of the importance in the audio output or the video output of content that is being output from the home device. According to the embodiment of the present invention, each of the audio condition of the content and the video condition of the content may be determined based on a preset value of a category corresponding to the content, or may be determined based on additional information corresponding to the content. Alternatively, the audio condition of the content and the video condition of the content may be determined based on whether or not the audio output or the video output of content is present. The home device of the present invention may detect whether or not the audio condition of the content and the video condition of the content satisfy preset degrees of importance, respectively.

Next, the output condition of the response to the user input may include a user detection condition that denotes whether or not a user is detected around the home device. The user detection condition may be determined based on a sensing value detected by the sensor unit, such as the image capturing sensor, infrared sensor, etc., of the home device. The user detection condition may denote whether or not a human being is detected around the home device, or may denote whether or not a user who implements a user input via the home device is detected.

Additionally, the output condition of the response to the user input may include a user input condition that denotes a user input means. According to the embodiment of the present invention, the user input may include a variety of user input means, such as a voice input, gesture input, motion input, touch input, button input, keyboard input, mouse input, sight line input, etc. The user input condition denotes what a means among a plurality of receivable user input means did the home device use to receive a user input.

According to the embodiment of the present invention, the home device may acquire the output condition of the response to the user input by combining one or more conditions among the above enumerated conditions.

After the home device has detected the output condition of the response to the user input as described above, the home device may output the response to the user input based on the detected output condition of the response to the user input (S340). The response to the user input may include at least one of an audio response and a video response. Whether or not the response to the user input includes the audio response and whether or not the response to the user input includes the video response may also be determined based on the output condition of the response to the user input.

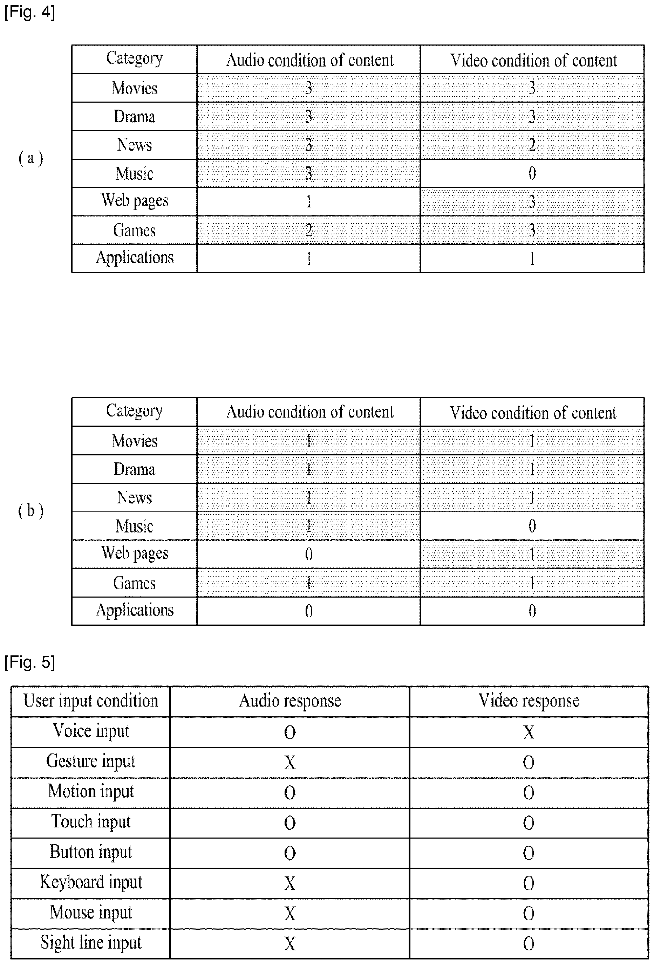

Hereinafter, detailed embodiments of the output condition of the response to the user input according to the present invention will be described with reference to FIGs. 4 and 5.

First, the output condition of the response to the user input may include the audio condition of the content and the video condition of the content. FIG. 4 shows an embodiment related to determination of the audio condition of the content and the video condition of the content. Referring to FIG. 4, the audio condition of the content and the video condition of the content may be determined respectively based on a preset value of a category corresponding to content. More specifically, the home device may store a table in which degrees of importance in the audio output and the video output of content are preset on a per predefined category basis, and may detect the audio condition of the content and the video condition of the content of the corresponding content based on what category the content that is being output corresponds to. The audio condition of the content and the video condition of the content may be represented by integer values within a predefined range as shown in FIG. 4(a), or may be represented by flag values as shown in FIG. 4(b).

Referring to FIG. 4(a), each of the audio condition of the content or the video condition of the content may be set to an integer value within a range of 0-3 on a per category basis of content. In FIG. 4(a), a higher set value may denote a higher degree of importance in the audio condition of the content or in the video condition of the content. For example, content of a music category may have a lower degree of importance in the video output than content of a drama or movie category, and content of a Web page category may have a lower degree of importance in the audio output than the content of the music category. Referring to FIG. 4(b), the audio condition of the content or the video condition of the content may be set to a flag value of 0 or 1 on a per category basis of content. In FIG. 4(b), the flag value of 1 may denote that the audio condition of the content or the video condition of the content has a high degree of importance, whereas the flag value of 0 may denote that the audio condition of the content or the video condition of the content has a low degree of importance. In this case, the home device may first determine what category among predefined categories the content that is being executed corresponds to, and then may determine a degree of importance in the audio condition of the content or the video condition of the content of the corresponding content using preset values of the audio condition of the content and the video condition of the content of the corresponding category. In FIGs. 4(a) and 4(b), the categories of content and the preset values of the audio condition of the content and the video condition of the content on a per category basis may be given by way of example for explanation of the present invention, and may be changed in various ways according to the objects of the present invention.

Meanwhile, according to another embodiment of the present invention, each of the audio condition of the content and the video condition of the content may be determined based on additional information corresponding to the content. For example, the home device may receive content through a network, and simultaneously may receive additional information including the audio condition of the content and the video condition of the content of the corresponding content. The received audio condition of the content and video condition of the content may be represented by integer values within a predefined range or flag values as shown in FIG. 4.

According to a further embodiment of the present invention, each of the audio condition of the content and the video condition of the content may be determined based on whether or not the audio output of content is present and whether or not the video output of content is present. The home device of the present invention may first detect whether or not content that is being executed includes the audio output. Then, the home device may set the audio condition of the content to a flag value of 1 if the audio output is present, and may set the audio condition of the content to a flag value of 0 if the audio output is not present. Similarly, the home device of the present invention may first detect whether or not content that is being executed includes the video output. Then, the home device may set the video condition of the content to a flag value of 1 if the video output is present, and may set the video condition of the content to a flag value of 0 if the video output is not present. According to the embodiment of the present invention, the home device may detect, in real time, whether content that is being executed includes the video output or the audio output, and then may adjust values of the audio condition of the content and the video condition of the content in real time based on the detected value.

As described above, once the home device detects the audio condition of the content and the video condition of the content, the home device may determine whether or not the detected audio condition of the content or video condition of the content satisfies a preset degree of importance. First, assuming that the audio condition of the content and the video condition of the content are set to integer values within a predefined range, whether or not each of the audio condition of the content and the video condition of the content satisfies a preset degree of importance may be determined based on whether or not the audio condition of the content or the video condition of the content has a value not less than a preset critical value. For example, in the embodiment of FIG. 4(a), if the critical value is set to 2, the audio condition of the content or the video condition of the content of each category, a value of which is not less than 2, may satisfy a preset degree of importance (represented by shaded sections). In this case, the critical value may be set differently on a per home device basis, and setting of the critical value may be changed by a user. Also, assuming that the audio condition of the content and the video condition of the content are set to flag values, whether or not each of the audio condition of the content and the video condition of the content satisfies a preset degree of importance may be determined based on the flag values. For example, in the embodiment of FIG. 4(b), the audio condition of the content or the video condition of the content of each category, a flag value of which is 1, may satisfy a preset degree of importance (represented by shaded sections).

In the present invention, the home device may adjust output of the response to the user input based on whether or not each of the audio condition of the content and the video condition of the content satisfies a preset degree of importance. More specifically, the home device may adjust output of the audio response based on whether or not the audio condition of the content satisfies a preset degree of importance, and may adjust output of the video response based on whether or not the video condition of the content satisfies a preset degree of importance.

Next, FIG. 5 shows an embodiment related to a user input condition that denotes a user input means and adjustment of a method for outputting the response to the user input based on the user input conditions.

According to the embodiment of the present invention, the home device may receive a user input using a plurality of user input means. For example, the user input may include a voice input, gesture input, motion input, touch input, button input, keyboard input, mouse input, or sight line input, and of course various other user input means may be used. In this case, the user input condition of the present invention may denote what is the received user input means. That is, the user input condition may denote what a means among a plurality of receivable user input means did the home device use to receive a user input, or what combinations of means did the home device use to receive a user input.

The home device may determine whether or not a response to the user input includes the audio response and the video response based on the user input condition. That is, whether the response to the user input will be output as the audio response, will be output as the video response, or will be output as both the audio response and the video response may be determined based on what an input means was used to receive the user input. For example, referring to FIG. 5, the response to the user input may include only the audio response if the user input is a voice input, but may include only the video response if the user input is a gesture input. Also, if the user input is a touch input, the response to the user input may include both the audio response and the video response. The method for outputting the response to the user input on a per user input condition basis shown in FIG. 5 is given by way of example for explanation of the present invention, and may be changed in various ways according to the objects of the present invention.

The home device of the present invention may adjust output of the audio response and the video response based on the output condition of the response to the user input. That is, whether to output the audio response and/or the video response, the output method, and the output level, etc. may be adjusted based on the audio condition of the content, the video condition of the content, the user detection condition, and the user input condition as described above. Hereinafter, detailed embodiments in which output of the response to the user input is adjusted based on the output condition of the response to the user input will be described.

### Case 1)

This is a case in which the audio condition of the content satisfies a preset degree of importance, the video condition of the content does not satisfy a preset degree of importance, and the user detection condition denotes that a user is detected around the home device.

If a response to a user input includes an audio response, an output level of the audio response from the audio output unit of the home device may be set to be less than an audio output level of content. In this way, it is possible to prevent output of the response to the user input from hindering listening to the content under the assumption that the content has a high degree of importance in sound.

If a response to a user input includes a video response, the video response may be output on the display unit of the home device. An area of the display unit on which the video response is output is not limited to a specific area. Thus, the video response may be output on a preset area, or an area determined based on properties of the video response.

If a response to a user input includes both an audio response and a video response, the audio response and the video response may be respectively output via the above described methods of the present case.

### Case 2)

This is a case in which the audio condition of the content satisfies a preset degree of importance, the video condition of the content does not satisfy a preset degree of importance, and the user detection condition denotes that a user is not detected around the home device.

If a response to a user input includes an audio response, an output level of the audio response from the audio output unit of the home device may be set to be greater than an audio output level of content. In this way, even if a user is located beyond a user detectable range of the home device, the user may clearly recognize the audio response.

If a response to a user input includes a video response, it may be possible to delay output of the video response until the user is detected around the home device.

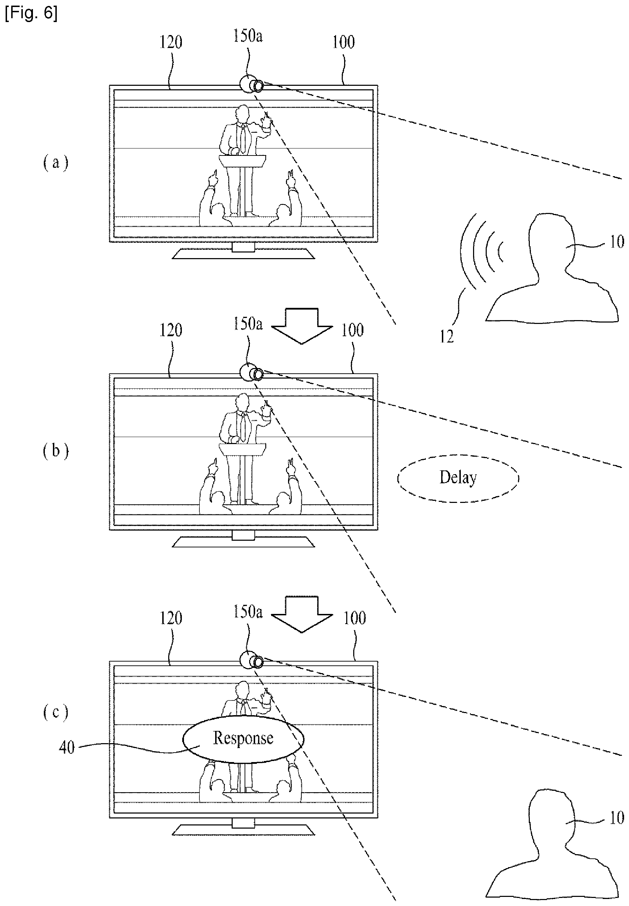

FIG. 6 shows a situation in which output of a video response is delayed according to the embodiment of the present invention. First, as shown in FIG. 6(a), if the user 10 implements a user input 12 via the home device 100, the home device 100 may receive the user input 12. The home device 100 may implement an operation based on the user input 12, and thereafter output a response to the user input 12. However, as shown in FIG. 6(b), if the user is not detected around the home device 100, the home device 100 may delay output of a video response. In this case, the home device 100 may determine whether or not the user is detected around the home device 100 using the image capturing sensor 150a. Meanwhile, referring to FIG. 6(c), the delayed video response 40 may begin to be output when the user is detected around the home device 100. The video response 40 may be output on the display unit 120 of the home device 100. A method for outputting the video response 40 may be adjusted based on the output condition of the response to the user input at the output time of the corresponding video response 40. For example, the method for outputting the video response 40 may be adjusted based on the video condition of the content at the output time of the video response 40. As a result of delaying output of the video response 40 as described above, it is possible to prevent the video response from being output in a situation in which the user is located beyond a predetermined distance from the home device and thus cannot recognize output of the video response.

If a response to a user input includes both an audio response and a video response, the audio response and the video response may be respectively output via the above described methods of the present case. That is, the output level of the audio response may be set to be greater than the audio output level of content, and output of the video response may be delayed until the user is detected around the home device. Meanwhile, according to another embodiment of the present invention, the audio response and the video response may be output together when the user is detected around the home device.

### Case 3)

This is a case in which the audio condition of the content does not satisfy a preset degree of importance, the video condition of the content satisfies a preset degree of importance, and the user detection condition denotes that a user is detected around the home device.

If a response to a user input includes an audio response, the audio response may be output from the audio output unit of the home device. The output level of the audio response from the audio output unit is not limited to a specific value. Thus, the audio response may be output based on a preset output level, or an output level determined based on properties of the audio response.

If a response to a user input includes a video response, the video response may be output at a preset video response area on the display unit of the home device so as not to overlap with a video output of content.

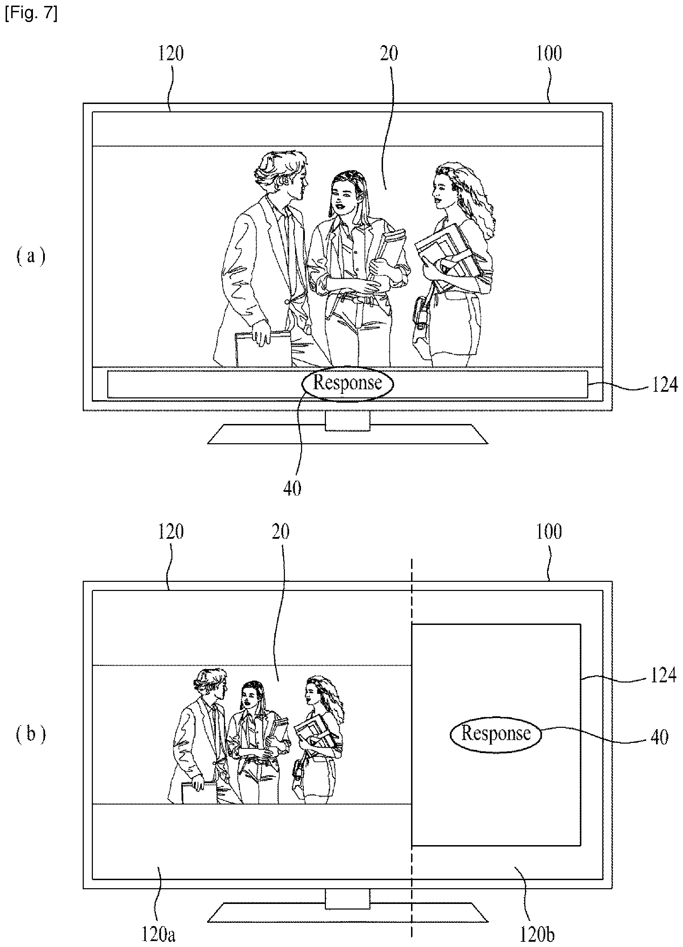

FIG. 7 shows a situation in which the video response 40 is output at a preset video response area 124 on the display unit 120 of the home device 100 according to the embodiment of the present invention. First, referring to FIG. 7(a), the video response area 124 may be provided at an area so as not to overlap with a video output 20 of content that is being output on the display unit 120. For example, the video response area 124 may be at least one rim area of the display unit 120 so as not to overlap with a display area of the video output 20 of content. Also, referring to FIG. 7(b), the home device 100 may divide the display unit 120 into two areas 120a and 120b such that one area serves as a display area of the video output 20 of content and the other area serves as the video response area 124. For example, as shown in FIG. 7(b), in the case in which the display unit 120 is divided into the two areas 120a and 120b, the video output 20 of content may be displayed on the area 120a, and the area 120b serves as the video response area 124 to output the video response 40.

Meanwhile, according to another embodiment of the present invention, the video response may be output via a variety of methods so long as the video response does not interfere with the video output of content. For example, the home device may allow the video response and the video output of content to be displayed so as to overlap each other, and in this case may adjust transparency of the video response to be displayed.

If a response to a user input includes both an audio response and a video response, the audio response and the video response may be output together. That is, the audio response may be output from the audio output unit of the home device as described above, and the video response may be output at the preset video response area on the display unit of the home device.

### Case 4)

This is a case in which the audio condition of the content does not satisfy a preset degree of importance, the video condition of the content satisfies a preset degree of importance, and the user detection condition denotes that a user is not detected around the home device.

If a response to a user input includes an audio response, the audio response may be output from the audio output unit of the home device. A further detailed description of this embodiment is equal to the above description of Case 3.

If a response to a user input includes a video response, output of the video response may be delayed until the user is detected around the home device. A further detailed description of this embodiment is equal to the above description of Case 2 with reference to FIG. 6.

If a response to a user input includes both an audio response and a video response, each of the audio response and the video response may be output via the above described methods of the present case. That is, the audio response may be output from the audio output unit of the home device, and output of the video response may be delayed until the user is detected around the home device. Meanwhile, according to another embodiment of the present invention, the audio response and the video response may be output together when the user is detected around the home device.

### Case 5)

This is a case in which each of the audio condition of the content and the video condition of the content satisfies a preset degree of importance, and the user detection condition denotes that a user is detected around the home device.

If a response to a user input includes an audio response, an output level of the audio response from the audio output unit of the home device may be set to be less than an audio output level of content.

If a response to a user input includes a video response, the video response may be output at a preset video response area on the display unit of the home device so as not to overlap with a video output of content. A further detailed description of this embodiment is equal to the above description of Case 3 with reference to FIG. 7.

If a response to a user input includes both an audio response and a video response, the audio response and the video response may be output respectively according to the above described methods of the present case. That is, the output level of the audio response may be set to be less than the audio output level of content, and the video response may be output at a preset video response area on the display unit of the home device so as not to overlap with a video output of content.

### Case 6)

This is a case in which each of the audio condition of the content and the video condition of the content satisfies a preset degree of importance, and the user detection condition denotes that a user is not detected around the home device.

If a response to a user input includes an audio response, an output level of the audio response from the audio input unit of the home device may be set to be greater than an audio output level of content.

If a response to a user input includes a video response, output of the video response may be delayed until the user is detected around the home device. A further detailed description of this embodiment is equal to the above description of Case 2 with reference to FIG. 6.

If a response to a user input includes both an audio response and a video response, the audio response and the video response may be output respectively according to the above described methods of the present case. That is, the output level of the audio response may be set to be greater than the audio output level of content, and output of the video response may be delayed until the user is detected around the home device. Meanwhile, according to another embodiment of the present invention, the audio response and the video response may be output together when the user is detected around the home device.

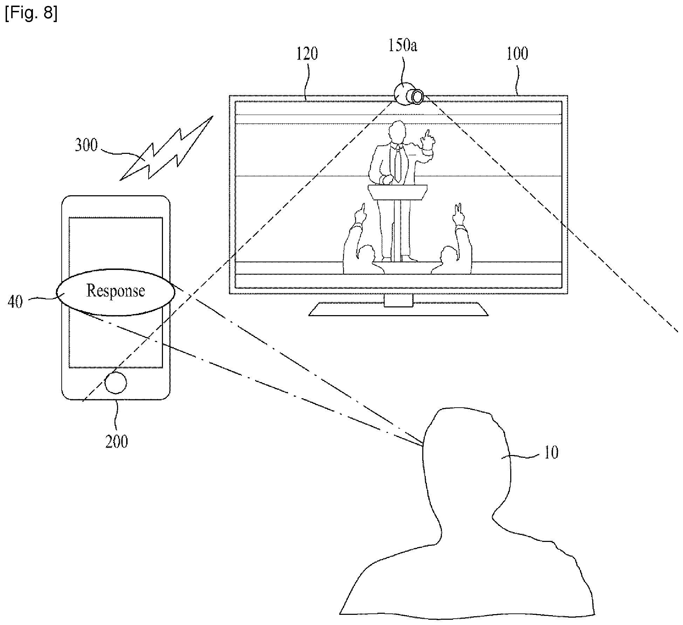

FIG. 8 shows a method for outputting a response to a user input according to the present invention. Referring to FIG. 8, the home device 100 according to the present invention may detect sight lines of the user 10, and may output a response to a user input based on the detected sight lines of the user 10.

First, in the case in which the user detection condition according to the present invention denotes that the user 10 is detected around the home device 100 and the response to the user input includes a video response, the home device 100 may determine whether or not a plurality of users 10 is detected. If only one user 10 is detected, the home device 100 may detect sight lines of the corresponding user 10 using the image capturing sensor 150a. The home device 100 according to the present invention may output the video response 40 at a place to which the sight lines of the detected user 10 are directed.

For example, if the sight lines of the user 10 are directed to a specific area on the display unit 120 of the home device 100, the home device 100 may output the video response 40 at the corresponding area on the display unit 120. Also, as shown in FIG. 8, if the sight lines of the user 10 are directed to the external device 200 that is connected to the home device 100 through the network 300, the home device 100 may output the video response 40 using the corresponding external device 200. In this case, the home device 100 may search for the closest external device 200 to the area to which the detected sight lines of the user 10 are directed, thereby transmitting the video response 40 to the corresponding external device 200. The external device 200, to which the video response 40 has been transmitted, may output the video response 40 using a display unit thereof. According to another embodiment of the present invention, if the external device 200 has an image capturing sensor, the corresponding external device 200 may directly detect the sight lines of the user 10. In this case, if the sight lines of the user 10 are directed to the corresponding external device 200, the external device 200 may output the video response 40 transmitted from the home device 100. According to the embodiment of the present invention, the external device 200 may output an audio response along with the video response 40.

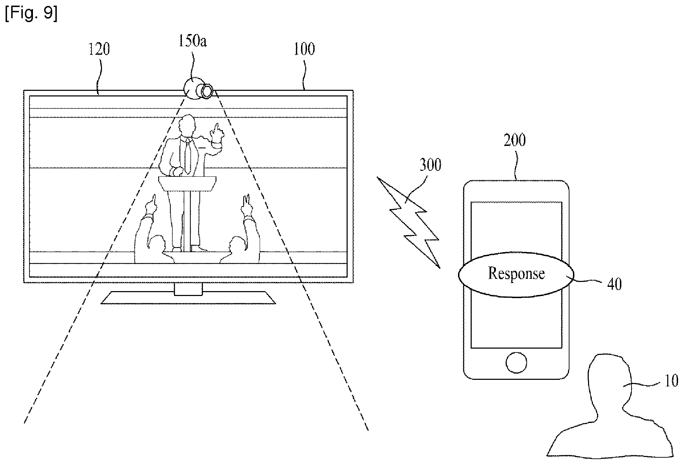

FIG. 9 shows a method for outputting a response to a user input when the user input is received through the external device 200 connected to the home device 100 through the network 300 according to a further embodiment of the present invention.

Referring to FIG. 9, the user 10 may implement a user input using the external device 200 that is connected to the home device 100 through the network 300. In this case, the external device 200 may include at least one sensor unit to receive the user input. The home device 100 may implement an operation based on the user input transmitted from the external device 200, and thereafter may determine whether or not the user 10 is detected around the home device 100 in order to output a response to the user input. If the user 10 is not detected around the home device 100, the home device 100 may output the response to the user input using the external device 200 that has received the user input. That is, the home device 100 may transmit the response to the user input, including at least one of the audio response and the video response 40, to the external device 200 that has received the user input. The external device 200 may output the corresponding response to the user input using at least one of the audio output unit and the display unit thereof.

### Mode for the Invention

Various embodiments have been described in the best mode for carrying out the invention.

### Industrial Applicability

As described above, the present invention is totally or partially applicable to electronic devices.

## Claims

1. A method for outputting a response to a user input using a home device (100), the method comprising:
outputting (S310) content including at least one of a video output and an audio output;
receiving (S320) a user input;
detecting (S330) an output condition of a response to the user input of the home device, wherein the output condition of the response to the user input includes an audio condition of the content that denotes a preset degree of importance in the audio output of the content, a video condition of the content that denotes a preset degree of importance in the video output of the content, and a user detection condition that denotes whether or not a user is detected around the home device;
outputting (S340) the response to the user, wherein the response to the user input includes at least one of an audio response and a video response, and output of at least one of the audio response and the video response is adjusted based on the detected output condition of the response to the user input; and
wherein, if the user detection condition denotes that the user is detected around the home device and the response to the user input includes the video response:
- determining whether or not a plurality of users is detected;
- detecting sight lines of the user with an image capturing sensor (150a) if only one user is detected; and
- outputting (S340) the video response using an external device (200) to which the detected sight lines of the user are directed based on the detected sight lines of the user.

2. The method according to claim 1, wherein each of the audio condition of the content and the video condition of the content is determined based on a preset value of a category corresponding to the content.

3. The method according to claim 1, wherein, if the audio condition of the content satisfies the preset degree of importance, the user detection condition denotes that the user is detected around the home device, and the response to the user input includes the audio response, the outputting the response to the user input includes setting an output level of the audio response so as to be less than an audio output level of the content.

4. The method according to claim 1, wherein, if the audio condition of the content satisfies the preset degree of importance, the user detection condition denotes that the user is not detected around the home device, and the response to the user input includes the audio response, the outputting the response to the user input includes setting an output level of the audio response so as to be greater than an audio output level of the content.

5. The method according to claim 1, wherein, if the user detection condition denotes that the user is not detected around the home device and the response to the user input includes the video response, the outputting the response to the user input includes delaying output of the video response until the user is detected around the home device.

6. The method according to claim 1, wherein, if the video condition of the content satisfies the preset degree of importance, the user detection condition denotes that the user is detected around the home device, and the response to the user input includes the video response, the outputting the response to the user input includes outputting the video response at a preset video response area (124) so as not to overlap with the video output of content.

7. The method according to claim 1, further comprising determining whether or not the user input is received from the external device that is connected to the home device through a network,
wherein, if the user detection condition denotes that the user is not detected around the home device and the user input is received from the external device, the outputting the response to the user input includes outputting the response to the user input using the external device that has received the user input.

8. A computer-readable medium (160) comprising code portions which, when executed on a processor (100), configure the processor to perform all steps of a method according to any one of the preceding method claims.

9. A home device (100) comprising:
a main control unit (110) configured to control operation of the home device;
a display unit (120) configured to generate a video output based on a command of the main control unit; and
an audio output unit (130) configured to generate an audio output based on a command of the main control unit,
wherein the main control unit is configured to:
- output content including at least one of the video output and the audio output;
- receive a user input;
- detect an output condition of a response to the user input of the home device, wherein the output condition of the response to the user input includes an audio condition of the content that denotes a preset degree of importance in the audio output of the content, a video condition of the content that denotes a preset degree of importance in the video output of the content, and a user detection condition that denotes whether or not a user is detected around the home device,
- output the response to the user, wherein the response to the user input includes at least one of an audio response and a video response, and output of at least one of the audio response and the video response is adjusted based on the detected output condition of the response to the user input, and
- wherein, if the user detection condition denotes that the user is detected around the home device and the response to the user input includes the video response:
-- determine whether or not a plurality of users is detected
-- detect sight lines of the user with an image capturing sensor (150a) if only one user is detected; and
-- output the video response using an external device (200) to which the detected sight lines of the user are directed based on the detected sight lines of the user.

## Patentansprüche

1. Verfahren zum Ausgeben einer Antwort auf eine Benutzereingabe unter Verwendung einer Heimvorrichtung (100), wobei das Verfahren umfasst:
Ausgeben (S310) von Inhalt, der zumindest eine aus einer Videoausgabe und eine Audioausgabe umfasst;
Empfangen (S320) einer Benutzereingabe;
Erfassen (S330) einer Ausgabebedingung einer Antwort auf die Benutzereingabe der Heimvorrichtung, wobei die Ausgabebedingung der Antwort auf die Benutzereingabe eine Audiobedingung des Inhalts, die einen voreingestellten Grad an Wichtigkeit in der Audioausgabe des Inhalts bezeichnet, eine Videobedingung des Inhalts, die einen voreingestellten Grad an Wichtigkeit in der Videoausgabe des Inhalts bezeichnet, und eine Benutzererfassungsbedingung umfasst, die angibt, ob ein Benutzer um die Heimvorrichtung herum erfasst wird oder nicht;
Ausgeben (S340) der Antwort an den Benutzer, wobei die Antwort auf die Benutzereingabe zumindest eine aus einer Audioantwort und einer Videoantwort umfasst, und eine Ausgabe zumindest einer der Audioantwort und der Videoantwort auf der Grundlage der erfassten Ausgabebedingung der Antwort auf die Benutzereingabe eingestellt wird; und
wobei, falls die Benutzererfassungsbedingung angibt, dass der Benutzer um die Heimvorrichtung herum erfasst wird und die Antwort auf die Benutzereingabe die Videoantwort umfasst:
- Bestimmen, ob eine Vielzahl von Benutzern erfasst wird oder nicht;
- Erfassen von Sichtlinien des Benutzers mit einem Bildaufnahmesensor (150a), falls lediglich ein einzelner Benutzer erfasst wird; und
- Ausgeben (S340) der Videoantwort unter Verwendung einer externen Vorrichtung (200), auf die die erfassten Sichtlinien des Benutzers gerichtet sind, auf der Grundlage der erfassten Sichtlinien des Benutzers.

2. Verfahren gemäß Anspruch 1, wobei jede der Audiobedingung des Inhalts und der Videobedingung des Inhalts auf der Grundlage eines voreingestellten Werts einer Kategorie entsprechend dem Inhalt bestimmt wird.

3. Verfahren gemäß Anspruch 1, wobei, falls die Audiobedingung des Inhalts den voreingestellten Grad an Wichtigkeit erfüllt, die Benutzererfassungsbedingung angibt, dass der Benutzer um die Heimvorrichtung herum erfasst wird, und die Antwort auf die Benutzereingabe die Audioantwort umfasst, dann das Ausgeben der Antwort auf die Benutzereingabe ein Einstellen eines Ausgabepegels der Audioantwort umfasst, um geringer auszufallen als ein Audioausgabepegel des Inhalts.

4. Verfahren gemäß Anspruch 1, wobei, falls die Audiobedingung des Inhalts den voreingestellten Grad an Wichtigkeit erfüllt, die Benutzererfassungsbedingung angibt, dass der Benutzer nicht um die Heimvorrichtung herum erfasst wird, und die Antwort auf die Benutzereingabe die Audioantwort umfasst, dann das Ausgeben der Antwort an den Benutzer ein Einstellen eines Ausgabepegels der Audioantwort umfasst, um größer auszufallen als der Audioausgabepegel des Inhalts.

5. Verfahren gemäß Anspruch 1, wobei, falls die Benutzererfassungsbedingung angibt, dass der Benutzer nicht um die Heimvorrichtung herum erfasst wird und die Antwort auf die Benutzereingabe die Videoantwort umfasst, dann das Ausgeben der Antwort auf die Benutzereingabe ein Verzögern einer Ausgabe der Videoantwort umfasst, bis der Benutzer um die Heimvorrichtung herum erfasst wird.

6. Verfahren gemäß Anspruch 1, wobei, falls die Videobedingung des Inhalts den voreingestellten Grad an Wichtigkeit erfüllt, die Benutzererfassungsbedingung angibt, dass der Benutzer um die Heimvorrichtung herum erfasst wird, und die Antwort auf die Benutzereingabe die Videoantwort umfasst, dann das Ausgeben der Antwort auf die Benutzereingabe ein Ausgeben der Videoantwort auf einem voreingestellten Videoantwortbereich (124) umfasst, um nicht mit der Videoausgabe des Inhalts zu überlappen.

7. Verfahren gemäß Anspruch 1, weiterhin umfassend Bestimmen, ob die Benutzereingabe von einer externen Vorrichtung empfangen wird oder nicht, die mit der Heimvorrichtung durch ein Netzwerk verbunden ist,
wobei, falls die Benutzererfassungsbedingung angibt, dass der Benutzer nicht um die Heimvorrichtung herum erfasst wird und die Benutzereingabe von der externen Vorrichtung empfangen wird, dann das Ausgeben der Antwort auf die Benutzereingabe ein Ausgeben der Antwort auf die Benutzereingabe unter Verwendung der externen Vorrichtung umfasst, die die Benutzereingabe empfing.

8. Computerlesbares Medium (160), das Codeabschnitte umfasst, die bei Ausführung auf einem Prozessor (100) den Prozessor konfigurieren, um alle Schritte eines Verfahrens gemäß zumindest einem der vorangegangenen Verfahrensansprüche durchzuführen.

9. Heimvorrichtung (100), umfassend:
eine Hauptsteuereinheit (110), die konfiguriert ist, um einen Betrieb der Heimvorrichtung zu steuern;
eine Anzeigeeinheit (120), die konfiguriert ist, um eine Videoausgabe auf der Grundlage eines Befehls der Hauptsteuereinheit zu erzeugen; und
eine Audioausgabeeinheit (130), die konfiguriert ist, um eine Audioausgabe auf der Grundlage eines Befehls der Hauptsteuereinheit zu erzeugen,
wobei die Hauptsteuereinheit konfiguriert ist, um:
- Inhalt einschließlich zumindest einer der Videoausgabe und der Audioausgabe auszugeben;
- eine Benutzereingabe zu empfangen;
- eine Ausgabebedingung einer Antwort auf die Benutzereingabe der Heimvorrichtung zu erfassen, wobei die Ausgabebedingung der Antwort auf die Benutzereingabe eine Audiobedingung des Inhalts, die einen voreingestellten Grad an Wichtigkeit in der Audioausgabe des Inhalts bezeichnet, eine Videobedingung des Inhalts, die einen voreingestellten Grad an Wichtigkeit in der Videoausgabe des Inhalts bezeichnet, und eine Benutzererfassungsbedingung umfasst, die angibt, ob ein Benutzer um die Heimvorrichtung herum erfasst wird oder nicht,
- die Antwort an den Benutzer auszugeben, wobei die Antwort auf die Benutzereingabe zumindest eine einer Audioantwort und eine Videoantwort umfasst, und zumindest eine der Audioantwort und der Videoantwort auf der Grundlage der erfassten Ausgabebedingung der Antwort auf die Benutzereingabe eingestellt wird, und
- wobei, falls die Benutzererfassungsbedingung angibt, dass der Benutzer um die Heimvorrichtung herum erfasst wird und die Antwort auf die Benutzereingabe die Videoantwort umfasst:
-- zu bestimmen, ob eine Vielzahl von Benutzern erfasst wird oder nicht,
-- Sichtlinien des Benutzers mit einem Bildaufnahmesensor (150a) zu erfassen, falls lediglich ein einzelner Benutzer erfasst wird; und
-- die Videoantwort unter Verwendung einer externen Vorrichtung (200) auszugeben, auf die die erfassten Sichtlinien des Benutzers gerichtet sind, auf der Grundlage der erfassten Sichtlinien des Benutzers.

## Revendications

1. Procédé pour délivrer une réponse à une entrée d'utilisateur à l'aide d'un dispositif domestique (100), le procédé comprenant :
délivrer (S310) un contenu comprenant au moins l'une parmi une sortie vidéo et une sortie audio ;
recevoir (S320) une entrée d'utilisateur ;
détecter (S330) une condition de délivrance d'une réponse à l'entrée d'utilisateur du dispositif domestique, la condition de délivrance de la réponse à l'entrée d'utilisateur comprenant une condition audio du contenu qui indique un degré d'importance prédéfini dans la délivrance audio du contenu, une condition vidéo du contenu qui indique un degré d'importance prédéfini dans la délivrance vidéo du contenu, et une condition de détection d'utilisateur qui indique si un utilisateur est ou non détecté autour du dispositif domestique ;
délivrer (S340) la réponse à l'utilisateur, la réponse à l'entrée d'utilisateur comprenant au moins l'une parmi une réponse audio et une réponse vidéo, et la délivrance d'au moins l'une parmi la réponse audio et la réponse vidéo étant ajustée sur la base de la condition de délivrance détectée de la réponse à l'entrée d'utilisateur ; et
dans lequel, si la condition de détection d'utilisateur indique que l'utilisateur est détecté autour du dispositif domestique et que la réponse à l'entrée d'utilisateur comprend la réponse vidéo :
- déterminer si une pluralité d'utilisateurs est ou non détectée ;
- détecter des lignes de vision de l'utilisateur avec un capteur de capture d'image (150a) si uniquement un utilisateur est détecté ; et
- délivrer (S340) la réponse vidéo à l'aide d'un dispositif externe (200) vers lequel les lignes de vision détectées de l'utilisateur sont dirigées sur la base des lignes de vision détectées de l'utilisateur.

2. Procédé selon la revendication 1, dans lequel chacune de la condition audio du contenu et de la condition vidéo du contenu est déterminée sur la base d'une valeur prédéfinie d'une catégorie correspondant au contenu.

3. Procédé selon la revendication 1, dans lequel, si la condition audio du contenu satisfait le degré d'importance prédéfini, si la condition de détection d'utilisateur indique que l'utilisateur est détecté autour du dispositif domestique, et si la réponse à l'entrée d'utilisateur comprend la réponse audio, la délivrance de la réponse à l'entrée d'utilisateur comprend le réglage d'un niveau de sortie de la réponse audio de manière à être inférieur à un niveau de sortie audio du contenu.

4. Procédé selon la revendication 1, dans lequel, si la condition audio du contenu satisfait le degré d'importance prédéfini, si la condition de détection d'utilisateur indique que l'utilisateur n'est pas détecté autour du dispositif domestique, et si la réponse à l'entrée d'utilisateur comprend la réponse audio, la délivrance de la réponse à l'entrée d'utilisateur comprend le réglage d'un niveau de sortie de la réponse audio de manière à être supérieur à un niveau de sortie audio du contenu.

5. Procédé selon la revendication 1, dans lequel, si la condition de détection d'utilisateur indique que l'utilisateur n'est pas détecté autour du dispositif domestique et si la réponse à l'entrée d'utilisateur comprend la réponse vidéo, la délivrance de la réponse à l'entrée d'utilisateur comprend le retardement de la délivrance de la réponse vidéo jusqu'à ce que l'utilisateur soit détecté autour du dispositif domestique.

6. Procédé selon la revendication 1, dans lequel, si la condition vidéo du contenu satisfait le degré d'importance prédéfini, si la condition de détection d'utilisateur indique que l'utilisateur est détecté autour du dispositif domestique, et si la réponse à l'entrée d'utilisateur comprend la réponse vidéo, la délivrance de la réponse à l'entrée d'utilisateur comprend la délivrance de la réponse vidéo au niveau d'une zone de réponse vidéo prédéfinie (124) de manière à ne pas chevaucher la délivrance vidéo du contenu.

7. Procédé selon la revendication 1, comprenant en outre la détermination du point de savoir si l'entrée d'utilisateur est ou non reçue à partir du dispositif externe qui est relié au dispositif domestique par l'intermédiaire d'un réseau,
dans lequel, si la condition de détection d'utilisateur indique que l'utilisateur n'est pas détecté autour du dispositif domestique et si l'entrée d'utilisateur est reçue à partir du dispositif externe, la délivrance de la réponse à l'entrée d'utilisateur comprend la délivrance de la réponse à l'entrée d'utilisateur à l'aide du dispositif externe qui a reçu l'entrée d'utilisateur.

8. Support lisible par ordinateur (160) comprenant des parties de code qui, lorsqu'elles sont exécutées sur un processeur (100), configurent le processeur pour effectuer toutes les étapes d'un procédé selon l'une quelconque des revendications de procédé précédentes.

9. Dispositif domestique (100) comprenant :
une unité de commande principale (110) configurée pour commander le fonctionnement du dispositif domestique ;
une unité d'affichage (120) configurée pour générer une délivrance vidéo sur la base d'une instruction de l'unité de commande principale ; et
une unité de délivrance audio (130) configurée pour générer une délivrance audio sur la base d'une instruction de l'unité de commande principale,
dans lequel l'unité de commande principale est configurée pour :
- délivrer un contenu comprenant au moins l'une parmi une délivrance vidéo et une délivrance audio ;
- recevoir une entrée d'utilisateur ;
- détecter une condition de délivrance d'une réponse à l'entrée d'utilisateur du dispositif domestique, la condition de délivrance de la réponse à l'entrée d'utilisateur comprenant une condition audio du contenu qui indique un degré d'importance prédéfini dans la délivrance audio du contenu, une condition vidéo du contenu qui indique un degré d'importance prédéfini dans la délivrance vidéo du contenu, et une condition de détection d'utilisateur qui indique si un utilisateur est ou non détecté autour du dispositif domestique,
- délivrer la réponse à l'utilisateur, la réponse à l'entrée d'utilisateur comprenant au moins l'une parmi une réponse audio et une réponse vidéo, et la délivrance d'au moins l'une parmi la réponse audio et la réponse vidéo étant ajustée sur la base de la condition de délivrance détectée de la réponse à l'entrée d'utilisateur, et
- dans lequel, si la condition de détection d'utilisateur indique que l'utilisateur est détecté autour du dispositif domestique et que la réponse à l'entrée d'utilisateur comprend la réponse vidéo :
-- déterminer si une pluralité d'utilisateurs est ou non détectée ;
-- détecter des lignes de vision de l'utilisateur avec un capteur de capture d'image (150a) si uniquement un utilisateur est détecté ; et
-- délivrer la réponse vidéo à l'aide d'un dispositif externe (200) vers lequel les lignes de vision détectées de l'utilisateur sont dirigées sur la base des lignes de vision détectées de l'utilisateur.
